# EUROPEAN PATENT APPLICATION

(11) **EP 4 475 309 A1**
(43) Date of publication of application: **11.12.2024**
(21) Application number: 23868645.5
(22) Date of filing: 22.09.2023
(51) Int. Cl.: H01M 50/289, H01M 50/251, H01M 50/24, H01M 50/572, H01M 50/543, H01M 50/502, H01M 50/262, H01M 50/30

(54) **BATTERY PACK**

(30) Priority: 23.09.2022 KR 20220120400
(71) Applicant: LG Energy Solution, Ltd., Seoul 07335 (KR)
(72) Inventor: KIM, Min Gu, Daejeon 34122 (KR); LEE, Jae Hyun, Daejeon 34122 (KR); JANG, Byung Do, Daejeon 34122 (KR); LEE, Hyoung Suk, Daejeon 34122 (KR)
(74) Representative: Plasseraud IP
(86) International application number: PCT/KR2023/014474
(87) International publication number: WO 2024/063593

(57) **Abstract**

The present technology relates to a battery pack including: a plurality of battery units each including a battery cell stack, and a terminal part provided on a front surface thereof and electrically connected to the battery cell stack; a pack housing including a battery unit mounting area and partition members configured to partition the battery unit mounting area into a plurality of parts, wherein each of the plurality of battery units is accommodated in one of the parts of the battery unit mounting area between the partition members; and cover plate assemblies coupled to the partition members while covering upper surfaces and front surfaces of the plurality of battery units.

## Description

### [Technical Field]

The present invention relates to a battery pack for accommodating battery units such as battery modules.

More particularly, the present invention relates to a battery pack capable of preventing the propagation of sparks or flames to adjacent battery units when fire occurs in a battery unit.

This application claims the benefit of priority based on Korean Patent Application No. 10-2022-0120400, filed on September 23, 2022, and the entire content of the Korean patent application is incorporated herein by reference.

### [Background Art]

A battery pack applied to electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged/discharged through an electrochemical reaction between these components.

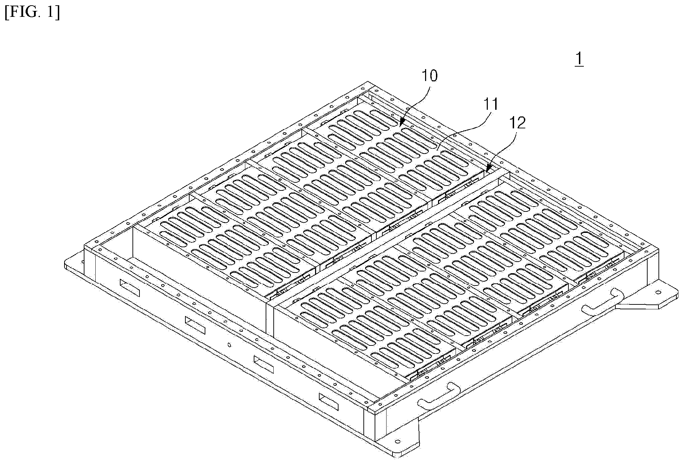

FIG. 1 is a schematic diagram illustrating an example of a battery pack 1 of the related art.

In FIG. 1, an upper cover of the battery pack 1 is omitted for convenience of illustration. As shown in FIG. 1, a plurality of battery modules 10 are arranged in a pack housing. In the battery pack 1 of FIG. 1, a plurality of battery modules 10 are arranged at left and right sides of a center frame. Terminal parts 12 such as terminal bus bars are provided on front surfaces of the battery modules 10 and connected in series or in parallel to electrically connect the battery modules 10.

When a thermal runaway occurs in a battery cell accommodated in one battery module, heat propagates to battery cells adjacent to the battery cell and thus sparks or flames burst out in all directions of the battery module. In this case, the battery modules adjacent to the battery module from which the flames burst out may also be exposed to the flames, thus leading to a chain explosion of the battery modules.

Because a base plate of a pack housing including a heat sink or a cooling channel is provided below the battery modules, the propagation of flames may be relatively easily suppressed.

However, as shown in FIG. 1, a space is formed between upper parts of the battery modules and an upper cover that is not shown and thus flames may burst out into the space. In particular, front surfaces of the battery modules on which terminal parts are installed are likely to be overheated, thus causing fires to occur. The front surfaces of the battery modules may be electrically short-circuited when flames occur and thus are vulnerable to ignition. In addition, the front surfaces of the battery modules are provided with the terminal parts and thus should be electrically insulated.

Therefore, it is necessary to develop a technique for protecting both upper and front surfaces of battery units such as battery modules from flames or sparks.

### [Related Art Literature]

### [Patent Document]

Korean Patent Application Publication No. 10-2021-0134165

### [Disclosure]

### [Technical Problem]

To address the above-described problem, the present invention is directed to providing a battery pack in which both upper and lower surfaces of battery units such as battery modules are covered with cover plate assemblies to prevent the propagation of sparks or flames to adjacent battery units.

### [Technical Solution]

An aspect of the present invention provides a battery pack including: a plurality of battery units each including a battery cell stack, and a terminal part provided on a front surface of the battery units and electrically connected to the battery cell stack; a pack housing including a battery unit mounting area and partition members configured to partition the battery unit mounting area into a plurality of parts, wherein each of the plurality of battery units is accommodated in the battery unit mounting area between the partition members; and cover plate assemblies coupled to the partition members while covering upper surfaces and front surfaces of the plurality of battery units.

Each of the plurality of battery units may be a battery module that includes a module case configured to accommodate the battery cell stack, and end plates coupled to a front surface and a rear surface of the module case.

Each of the plurality of battery units may be a moduless cell block in which the bus bar assemblies are coupled to a front surface and a rear surface of the battery cell stack and a part of or an entire module case for accommodation of the battery cell stack is omitted, and a terminal part may be provided on the bus bar assembly coupled to the front surface of the battery cell stack.

In the moduless cell block, side support plates may be coupled to both sides of the battery cell stack, and both an upper surface and a lower surface of the battery cell stack, excluding surfaces to which the side frames and the bus bar frame assembly are coupled, may be open.

The pack housing may include a center frame extending to cross the battery unit mounting area. A plurality of partition members may be arranged at both sides of the center frame to be perpendicular to a direction in which the center frame extends, and the plurality of battery units may be arranged between the plurality of partition members such that front surfaces of the plurality of battery units face the center frame.

A plurality of cover plate assemblies may be provided to correspond to the number of the plurality of battery units, and coupled to the partition members while covering the plurality of battery units.

Each of the cover plate assemblies may include an upper cover plate covering an upper surface of the battery unit, and a front cover plate vertically coupled to one end of the upper cover plate to cover the front surface of the battery unit.

A plurality of fastening parts may protrude at intervals along both sides of the upper cover plate, and be coupled to upper surfaces of the partition members.

Fastening parts of upper cover plates of adj acent cover plate assemblies may be coupled to the same partition members by disposing the fastening parts of the upper cover plate of one of the adjacent cover plate assemblies between the fastening parts of the upper cover plate of the other cover plate assembly to mesh the fastening parts with each other.

The front cover plate may be formed of an electrically insulating material.

Each of the cover plate assemblies may further include a rear cover plate vertically coupled to another end of the upper cover plate to cover a rear surface of the battery unit, and a plurality of venting holes may be formed in the rear cover plate.

Another aspect of the present invention provides a battery pack including: a plurality of cell blocks each including a battery cell stack, a bus bar assembly coupled to a front surface of the battery cell stack, and side support plates coupled to both sides of the battery cell stack; a pack housing including a cell block mounting area, wherein the plurality of cell blocks are fixedly installed on the cell block mounting area; and cover plate assemblies coupled to the plurality of cell blocks while covering upper surfaces and front surfaces of the plurality of cell blocks.

The pack housing may include a center frame extending to cross the cell block mounting area.

The plurality of cell blocks may be arranged perpendicular to a direction in which the center frame extends while front surfaces thereof face the center frame.

The side support plates may include a first side support plate coupled to one side of the battery cell stack, and a second side support plate coupled to another side of the battery cell stack, wherein the first and second side support plates may have complementary structures to be meshed with each other. Adjacent cell blocks may be coupled to each other by meshing a first side support plate of one of two opposite battery cell stacks with a second side support plate of the other battery cell stack, and fixedly installed in the pack housing by coupling the first and second side support plates that are meshed with each other to the cell block mounting area.

The first and second side support plates that are meshed with each other may form a stack partition member to partition the battery cell stacks, and the cover plate assembly may be coupled to an upper surface of the stack partition member.

### [Advantageous Effects]

In the present invention, cover plate assemblies covering upper and front surfaces of battery modules are provided. Therefore, even when flames occur in one battery module, battery modules adjacent to the battery module can be protected from the flames, and the propagation of the flames to the adjacent battery modules can be prevented.

In addition, the cover plate assemblies have an insulating function to electrically insulate terminal parts on front surfaces of the battery modules.

The present invention is also applicable to not only general battery modules but also battery packs accommodating moduless cell blocks in which a part of or an entire module case is omitted. By installing such cell blocks in a battery pack, a so-called battery pack having a cell-to-pack structure can be achieved. Therefore, the present invention is also effective in preventing the propagation of heat in a battery pack having the cell-to-pack structure.

In an embodiment of the present invention, a cover plate assembly includes a rear cover plate and thus rear surfaces of battery units can also be protected from flames.

In addition, in an embodiment of the present invention, cell blocks configured to be coupled to each other are provided, and the cover plate assemblies can be coupled to the cell blocks coupled to each other, and thus, there is no need to install partition members in a pack housing. Therefore, a battery pack having a simpler cell-to-pack structure can be manufactured, thereby significantly improving energy density.

### [Brief Description of the Drawings]

FIG. 1 is a schematic diagram illustrating an example of a battery pack of the related art.
FIG. 2 is a perspective view of a battery pack according to an embodiment of the present invention.
FIG. 3 is a schematic diagram illustrating a structure of a general battery pack.
FIGS. 4 and 5 are perspective views illustrating coupling relationships between battery modules and cover plate assemblies.
FIG. 6 is a schematic diagram illustrating a process of coupling cover plate assemblies to a battery pack.
FIGS. 7 and 8 are a perspective view and a side cross-sectional view of a state in which cover plate assemblies are coupled to a battery pack.
FIG. 9 is a perspective view illustrating a coupling relationship between a cover plate assembly and a battery module applied to another embodiment of the present invention.
FIG. 10 is a side cross-sectional view of a battery pack according to an embodiment of the present invention.
FIGS. 11 and 12 are perspective views of examples of a moduless cell block which is a battery unit.
FIG. 13 is a perspective view of a battery pack according to another embodiment of the present invention.
FIG. 14 is a perspective view of another example of a moduless cell block which is a battery unit.
FIG. 15 is a schematic diagram illustrating a process of coupling moduless cell blocks such as that in FIG. 14.
FIGS. 16 and 17 are perspective views illustrating a process of coupling battery packs such as that in the embodiment of FIG. 14.

### [Best Mode]

The present invention will become more apparent by describing exemplary embodiments thereof in detail with reference to the accompanying drawings. Embodiments described below are provided as examples to help understand the present invention, and it should be understood that the present invention may be implemented in various forms different from the embodiments. To help understand the present invention, the accompanying drawings may not be shown in an actual scale but the sizes of some components may be exaggerated.

Hereinafter, the present invention will be described in detail.

A battery pack 1000 of the present invention includes: a plurality of battery units 100 each including a battery cell stack 50 and a terminal part T electrically connected to the battery cell stack 50 and provided on a front surface thereof; a pack housing 200 including a battery unit mounding area and partition members 223 for partitioning the battery unit mounding area into a plurality of parts, in which each of the battery units 100 is accommodated in one of the parts of the battery unit mounting area between the partition members 223; and cover plate assemblies 300 coupled to the partition members 223 while covering upper and front surfaces of the battery units 100.

The cover plate assembly 300 of the present invention is applicable to not only a general battery module similar to that of the related art but also a moduless cell block in which a part of or an entire module case is omitted. Therefore, in the present specification, the term "battery unit" is proposed as a concept including both such a battery module and such a cell block. The battery unit 100 of the present invention basically includes the battery cell stack 50, and includes the terminal part T (terminal bus bar) so that the battery cell stack 50 may generate an electrical output. The battery cell stack 50 is formed by stacking a plurality of battery cells 51.

The terminal part T is electrically connected to the electrode leads 51a and 51b of the battery cell stack 50, and is also electrically connected to a terminal part T of a neighboring battery unit 100 or an external electrical device. The terminal part T may be provided in bus bar assemblies 121 and 131 coupled to a front end or a rear end of the battery cell stack 50, a bus bar frame, an end plate 112, or a combination of a bus bar assembly/frame and an end plate. For example, when the battery unit 100 is a battery module 110, the battery module 110 may include a module case 111 in which the battery cell stack 50 is accommodated, and a bus bar frame coupled to the battery cell stack 50 at front and rear ends of the module case 111. The bus bar frame may be coupled to the end plate 112 or integrally formed with the end plate 112 as necessary. The bus bar frame includes an inter-bus bar, a connector, or a terminal bus bar (terminal) T electrically connected to the electrode leads of the battery cell 51.

In general, the battery module 110 includes the module case 111 completely surrounding the periphery of the battery cell stack 50. However, a battery module of moduless type or cell block in which a part of or the entire module case 111 is omitted to simplify the structure and reduce the number of components to increase energy density has been recently proposed. Battery packs 3000 and 4000 each having a cell-to-pack structure are obtained by configuring the battery pack 1000 using such moduless cell blocks 120, 120', or130. Similarly, the cell blocks 120, 120', and 130 each include a battery cell stack 50. In addition, because a part of or the entire module case 111 is omitted, at least some of upper, lower, left and right sides of the battery cell stack 50 are open to the outside. For electrical connection, each of the moduless cell blocks 120, 120', and 130 also includes a terminal part T to be coupled to the electrode leads of the battery cell stack 50. To this end, the bus bar assemblies 121 and 131 may be coupled to the front and rear ends of the battery cell stack 50.

According to an electrical connection type, the terminal part T may be provided on the front surface of or both the front surface and the rear surface of the battery unit 100 described above.

The pack housing 200 includes the battery unit mounting area for accommodating the plurality of battery units 100.

The battery unit mounting area is a bottom plate, i.e., a base plate 221, of the pack housing 200. The base plate 221 may include a refrigerant flow path or a separate heat sink may be installed under the base plate 221. The pack housing 200 may further includes side wall frames 222 surrounding the base plate 221, and a combination of the base plate 221 and the side wall frames 222 may be referred to together as a lower pack housing 220. An upper cover (upper pack housing 210) is coupled to the lower pack housing 220 to form the pack housing 200.

The plurality of battery units 100 are accommodated in the pack housing 200. Generally, the partition members 223 are provided to align the battery units 100 in the pack housing 200. That is, the battery unit mounting area is divided into parts by the partition members 223, and each of the battery units 100 is accommodated in one of the parts of the battery unit mounting area between the partition members 223. The partition members 223 are fixedly installed on the battery unit mounting area, i.e., the base plate 221.

As will be described below, the present invention is applicable not only to a case in which the partition members 223 are installed in advance in the pack housing 200 but also to a case in which the partition members 223 are not installed in advance. That is, in an embodiment of the present invention, side support plates on both sides of a cell block may be coupled to each other to form a stack partition member 132 for partitioning the battery cell stack 50 included in the cell block. In this case, the stack partition member 132 may be coupled to the base plate 221 of the pack housing 200, so that both the cell block and the stack partition member 132 may be fixed to the pack housing 200. In the present embodiment, the cover plate assembly 300 may be coupled to the stack partition member 132.

A center frame 224 may be installed in the pack housing 200, as well as the partition member 223. The center frame 224 extends to cross the battery unit mounting area. A plurality of partition members 223 may be arranged on both sides of the center frame 224 to be perpendicular to a direction in which the center frame 224 extends. By disposing the center frame 224, the battery units 100 on left and right sides of the center frame 224 may be spaced apart from each other to be electrically insulated. The center frame 224 and the battery units 100 are spaced a certain insulating distance from each other. As will be described below, a front cover plate 320 of the cover plate assembly 300 may be installed by being inserted into a space between the front surface of the battery unit 100 and the center frame 224.

The present invention includes the cover plate assembly 300 coupled to the partition members 223 or the stack partition member 132 while covering the upper and front surfaces of the battery units 100.

When a fire occurs in one of the battery units 100, flames may blow out in all directions. Because the base plate 221 with a cooling structure is installed below the battery units 100, the propagation of flames to lower sides of the battery units 100 may be suppressed. In addition, the partition members 223 (or the stack partition members 132) are located at both sides of the battery units 100 (or the battery cell stacks 50), the propagation of flames to the both sides of the battery units 100 may also be prevented. Generally, the rear surface of the battery unit 100 faces the side wall frames 222 of the pack housing 200. In many cases, the side wall frames 222 of the pack housing 200 that have recently been proposed are provided with venting mechanism to induce a gas and flames in the pack to the outside. Because the rear surface of the battery unit 100 is disposed adjacent to the venting mechanism, the propagation of flames to the rear of the battery unit 100 may be suppressed to some extent.

However, the upper surface of the battery unit 100 is open and thus it is difficult to prevent the propagation of flames thereto. The cover plate assembly 300 of the present invention is coupled to the partition members while covering the front surface of the battery units 100 and thus may prevent sparks or flames from blowing out to the upper parts of the battery units 100.

The front surfaces of the battery units 100 are provided with the terminal parts T and thus are very vulnerable to flames. The cover plate assembly 300 also covers the front surfaces of the battery units 100. That is, the cover plate assembly 300 covers both the upper and front surfaces of the battery units 100 that are most vulnerable to flames, thus preventing the propagation of flames or sparks to adjacent battery units 100.

The cover plate assembly 300 may include an upper cover plate 310 covering the upper surfaces of the battery units 100, and a front cover plate 320 vertically coupled to one end of the upper cover plate 310 to cover the front surfaces of the battery units 100. The cover plate assembly 300 may cover upper and front surfaces of all battery units 100 accommodated in the pack housing 200. That is, one large cover plate assembly 300 may be configured to cover the upper and front surfaces of a plurality of battery units 100. For example, when a plurality of battery units 100 are arranged on left and right sides of the center frame 224, the propagation of flames may be suppressed by installing only one cover plate assembly 300 on each of the left and right sides of the center frame 224.

In this case, the number of cover plate assemblies 300 required to prevent the propagation of flames can be reduced. However, because the upper and front surfaces of the plurality of battery units 100 are covered with one large upper cover plate 310 and one large front cover plate 320, spaces between the battery units 100 are partially closed. As described above, when the volume of open spaces between the battery units 100 decreases, an internal pressure of the pack may increase during the venting of gas, thus increasing a risk of explosion. When there is abnormality in one battery unit 100 or the cover plate assembly 300 is damaged due to a fire, the entire cover plate assembly 300 should be removed, thus increasing costs for the replacement of components.

When this point is considered, it is preferable to install a plurality of cover plate assemblies 300 to correspond to the number of battery units 100. That is, cover plate assemblies 300 may be coupled to the partition members (or the stack partition members 132) while each covering one of the battery units 100. Accordingly, the cover plate assemblies 300 may suppress the generation of flames on the front and rear surfaces of the battery units 100 while a gas may be discharged through fine gaps between the cover plate assemblies 300 to reduce an internal pressure of the pack.

When the rear surfaces of the battery units 100 are also covered by the cover plate assembly 300, there is a possibility that an internal pressure of the pack will increase. Accordingly, the cover plate assembly 300 of the present invention covers only the upper surface and the front surface of the battery unit 100. However, when an appropriate pressure reduction means is provided, the rear surface of the battery unit 100 may also be covered with the cover plate assembly 300. In an embodiment of the present invention, an example in which the rear surface of the battery unit 100 is covered with the cover plate assembly 300 is shown.

### [Embodiments of the Present Invention]

Hereinafter, embodiments of the present disclosure will be described in detail with reference to the accompanying drawings.

### (First Embodiment)

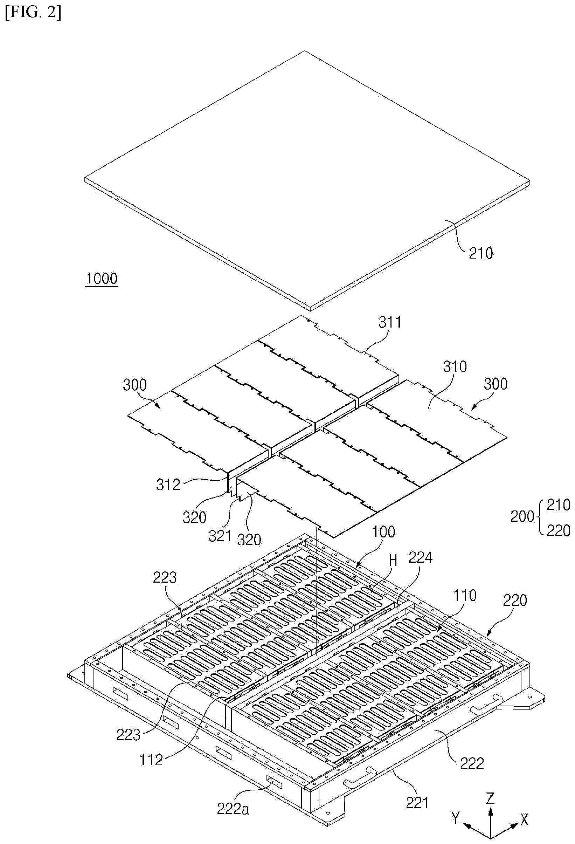

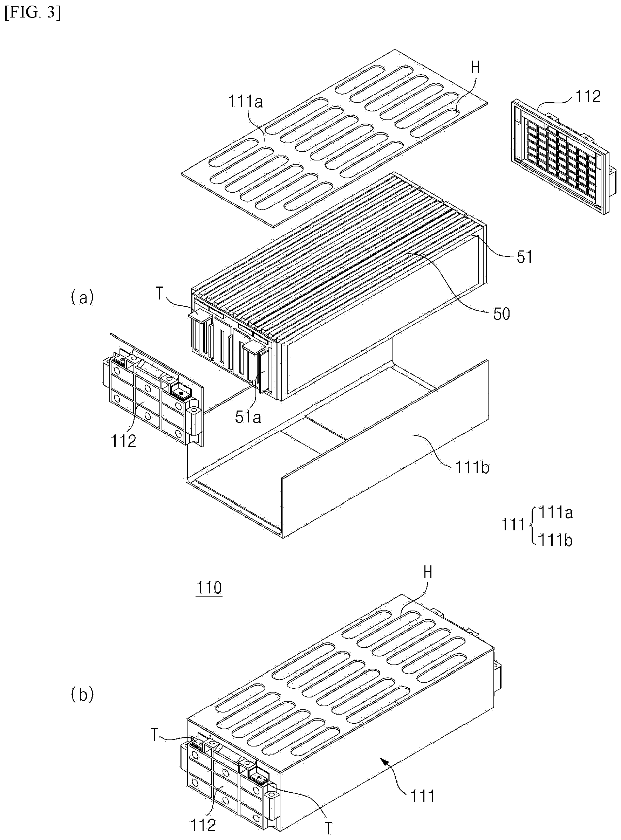

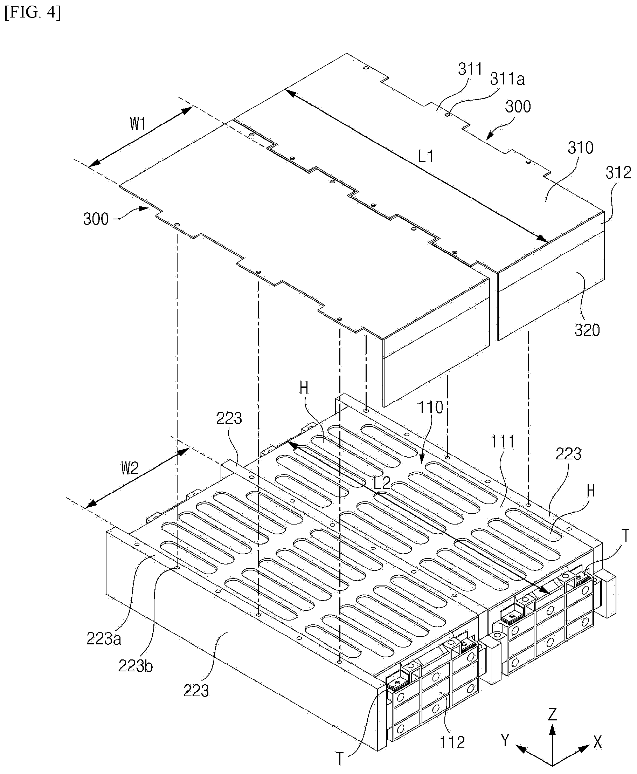

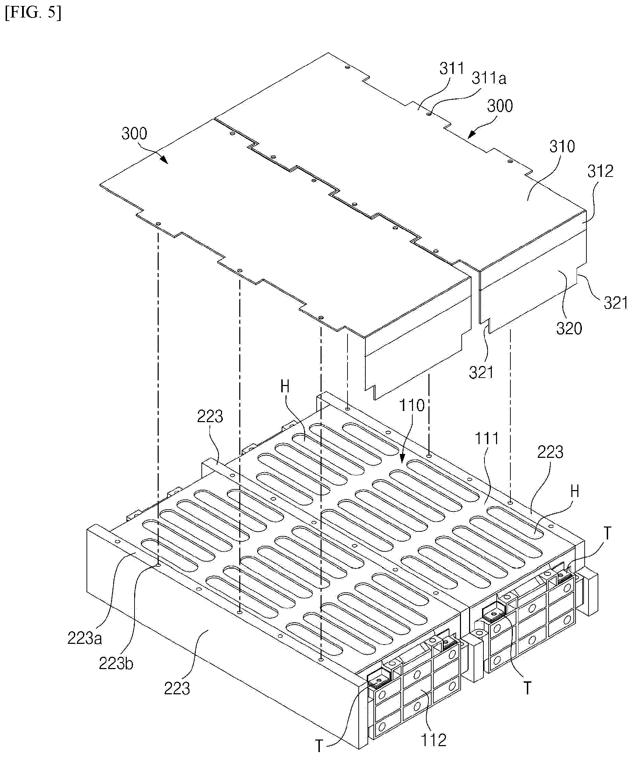

FIG. 2 is a perspective view of a battery pack 1000 according to an embodiment of the present invention. FIG. 3 is a schematic diagram illustrating a structure of a general battery pack 110. FIGS. 4 and 5 are perspective views illustrating coupling relationships between battery modules 110 and cover plate assemblies 300.

The present embodiment illustrates an example in which the general battery module 110 is employed as a battery unit 100.

Referring to FIGS. 2 and 3, the battery module 110 includes a battery cell stack 50, a module case 111 for accommodating the battery cell stack 50, and end plates 112 coupled to front and rear surfaces of the module case 111. The module case 111 may include an upper case 111a and a lower case 111b but is not limited thereto. A bus bar frame is coupled to an inner side of the end plate 112, and a terminal part T derived from the bus bar frame is exposed to both outer sides of the end plate 112. Referring to a combined perspective view of the battery module 110 of FIG. 3, it can be seen that the terminal part T is exposed on a front surface of the battery module 110. The module case 111 may be provided with venting holes H for discharging a gas in the battery module 110.

FIG. 2 illustrates a pack housing 200 that includes a battery module mounting area and partition members for partitioning the battery module mounting area into a plurality of parts. The pack housing 200 includes an upper pack housing 210 and a lower pack housing 220. The lower pack housing 220 includes a base plate 221 forming the battery module mounting area, and side wall frames 222 disposed along the perimeter of the base plate 221. A center frame 224 is installed on the base plate 221 to cross the battery module mounting area. A gas venting channel C may be provided in the side wall frames 222 and communicate with a venting opening 221a that is open to the outside.

Referring to FIG. 2, a direction in which the center frame 224 extends (a width direction of the battery module 110) is denoted as an X-axis direction. Battery modules 110 are arranged in a direction perpendicular to the X-axis direction, and the direction perpendicular to the X-axis direction is a longitudinal direction of the battery modules 110. A Z-axis direction is a height direction.

In addition, partition members 223 are installed on the base plate 221 to partition the battery module mounting area. A plurality of partition members 223 are arranged on both sides of the center frame 224 to be perpendicular to the direction in which the center frame 224 extends. The battery modules 110 are disposed between the partition members 223 such that front surfaces of the battery modules 110 face the center frame 224. Upper surfaces 223a of the partition members 223 are provided with fastening holes 223b (see Fig. 4) to be fastened with the upper cover plate 310 of the cover plate assembly 300.

The cover plate assembly 300 is coupled to the partition members 223 while covering upper and front surfaces of the battery modules 110. As shown in FIG. 2, a plurality of cover plate assemblies 300 of the present embodiment are provided to correspond to the number of battery modules 110, and coupled to the partition members 223 while covering the battery units 100.

FIGS. 4 and 5 illustrate coupling relationships between the battery modules 110 and the cover plate assemblies 300, in which only the battery modules 110, partition members 223 between the battery modules 110, and the cover plate assemblies 300 are shown in an enlarged view.

In FIGS. 4 and 5, the partition members 223 are coupled in advance to a pack housing. In addition, the battery modules 110 are located between the partition members 223 and fixed to the partition members 223 or the base plate 221 of the pack housing 200 through a fastening member (not shown).

In this state, each of cover plate assemblies 300 is positioned to cover the upper and front surfaces of one of the battery modules 110, and coupled to the partition members 223.

Specifically, the cover plate assembly 300 may include an upper cover plate 310 covering the upper surfaces of the battery modules 110, and a front cover plate 320 vertically coupled to one end of the upper cover plate 310 to cover the front surfaces of the battery modules 110.

The upper cover plate 310 and the front cover plate 320 may be formed of the same material or different materials. The front cover plate 320 covers the front surface of the battery module 110 on which the terminal part T is installed and thus is preferably formed of an electrically insulating material. For example, the front cover plate 320 may be formed of an electrically insulating ceramic material such as mica. The upper cover plate 310 may also be formed of an insulating material as mica. However, the upper cover plate 310 may be formed of a metal material with high rigidity and a high melting point to resist flames rising upward. For example, the upper cover plate 310 may be formed of stainless steel, aluminum, an aluminum alloy, or steel.

Preferably, the front cover plate 320 may be formed of an insulating material (e.g., mica), and the upper cover plate 310 may be formed of a metal (e.g., steel) with a high melting point. When the upper cover plate 310 and the front cover plate 320 are formed of the same material, one end of the upper cover plate 310 may be vertically bent and the bent end may be used as the front cover plate 320. Alternatively, the cover plate assembly 300 may be formed by combining the upper cover plate 310 with the front cover plate 320 of a material different from that of the upper cover plate 310. For example, the front cover plate 320 formed of mica may be coupled to an end of the upper cover plate 310 formed of steel. The upper cover plate 310 and the front cover plate 320 may be fastened by a fastening member such as a screw or a bolt. Alternatively, the upper cover plate 310 and the front cover plate 320 may be coupled by bonding with an adhesive or by other methods such as welding.

Referring to FIGS. 4 and 5, one end of the upper cover plate 310 is bent vertically to form a coupling portion 312 of a certain length, and the front cover plate 320 is bonded or fastened to an inner side of the coupling portion 312 to couple the front cover plate 320 to the upper cover plate 310. For example, an end of the upper cover plate 310 formed of steel may be bent to obtain the coupling portion 312, and the front cover plate 320 formed of mica may be adhered to an inner side of the coupling portion 312 to manufacture the cover plate assembly 300. The front cover plate 320 may be formed of a material having an insulating property other than mica described above. The upper cover plate 310 may be formed of a material having fire-resistance properties and fire-prevention properties other than the metals described above.

The upper cover plate 310 is formed long enough to cover an entire upper surface of the battery module 110. That is, a length L1 of the upper cover plate 310 should be equal to or greater than a length L2 that is the sum of a length of the module case 111 and a thickness of the end plate 112. However, when the upper cover plate 310 is extremely long, the distance between the front cover plate 320 on the end of the upper cover plate 310 and the end plate 112 increases, and the upper cover plate 310 may come into contact with the center frame 224 in front of the battery module 110. Therefore, the length L1 of the upper cover plate 310 is preferably equal to or slightly greater than the length L2 that is the sum of the length of the module case 111 and the thickness of the end plate 112. A width W1 of the upper cover plate 310 is preferably equal to or slightly greater than a width of the battery module 110 to completely cover the width W2 of the battery module 110.

A length (height) of the front cover plate 320 is preferably equal to a height of the battery module 110 to cover the front surface of the battery module 110. However, the height of the front cover plate 320 may be slightly less than that of the battery module 110 in consideration of an internal space of the pack or a space of arrangement of other components. A shape of the front cover plate 320 of FIG. 4 is slightly different from that of the front cover plate 320 of FIG. 5. The front cover plate 320 of FIG. 4 has a rectangular shape to cover the front surface of the battery module 110. Cutout portions 321 are provided at both corners of a lower end of the front cover plate 320 of FIG. 5. The pack housing 200 may be provided with coupling projections (not shown) to be coupled to the corners of the bottom of the battery module 110. The cutout portions 321 are provided to avoid the coupling projections when the coupling projections are installed. That is, when the corners of the battery module 110 are coupled to the coupling projections of the pack housing 200, the coupling projections are located in spaces of the cutout portions 321 so that the front cover plate 320 may be installed to fit tightly to the shapes of the battery module 110 and the coupling projections. The front cover plate 320 is brought into close contact with the end plate 112 on the front surface of the battery module 110 or is disposed a certain distance from the end plate 112 to protect the terminal part T or other electrical components installed on the end plate 112.

The cover plate assembly 300 is coupled to the partition members 223 by coupling the upper cover plate 310 to the upper surfaces 223a of the partition members 223. To this end, the upper cover plate 310 may include a plurality of fastening parts 311 provided along both sides thereof. Fastening holes 311a may be provided in the fastening parts 311. The plurality of fastening parts 311 may be provided at intervals along both sides of the upper cover plate 310. As shown in FIGS. 4 and 5, fastening parts 311 of adjacent upper cover plates 310 may be configured to be meshed with each other. That is, fastening parts 311 of an upper cover plate 310 of one of neighboring cover plate assemblies 300 are located between fastening parts 311 of the upper cover plate 310 of the other cover plate assembly 300 to mesh the fastening parts 311 with each other, so that the fastening parts 311 of the neighboring upper cover plates 310 may be placed on the same partition members 223. Therefore, the fastening parts 311 of the neighboring upper cover plates 310 may be fastened (coupled) to the upper surfaces of the partition members 223, thereby reducing a space required to couple the fastening parts 311. In addition, by meshing the upper cover plates 310 of the neighboring cover plate assemblies 300 with each other, the cover plate assemblies 300 may be more firmly coupled to the partition members 223 while reducing a space occupied by the cover plate assemblies 300 in the pack. However, as shown in FIG. 2, there is no upper cover plate 310 neighboring to fastening parts 311 of an upper cover plate 310 of a cover plate assembly 300 coupled to an outermost partition member 223 in the X-axis direction and thus the fastening parts 311 are not meshed with any fastening parts 311.

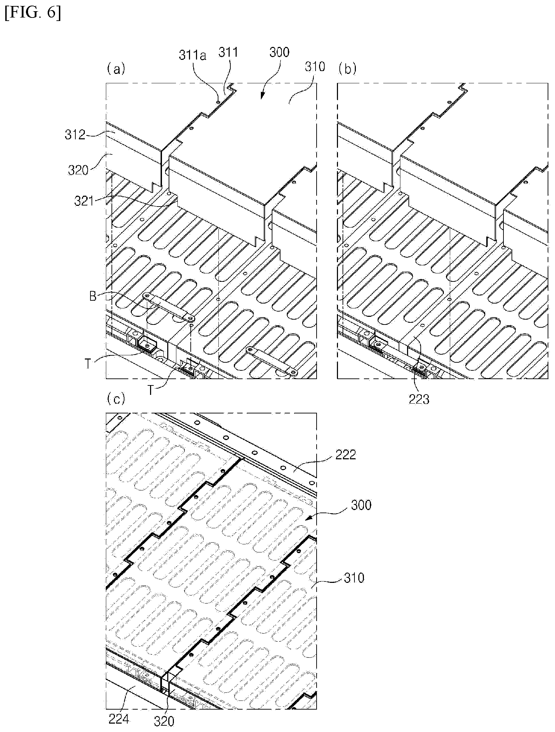

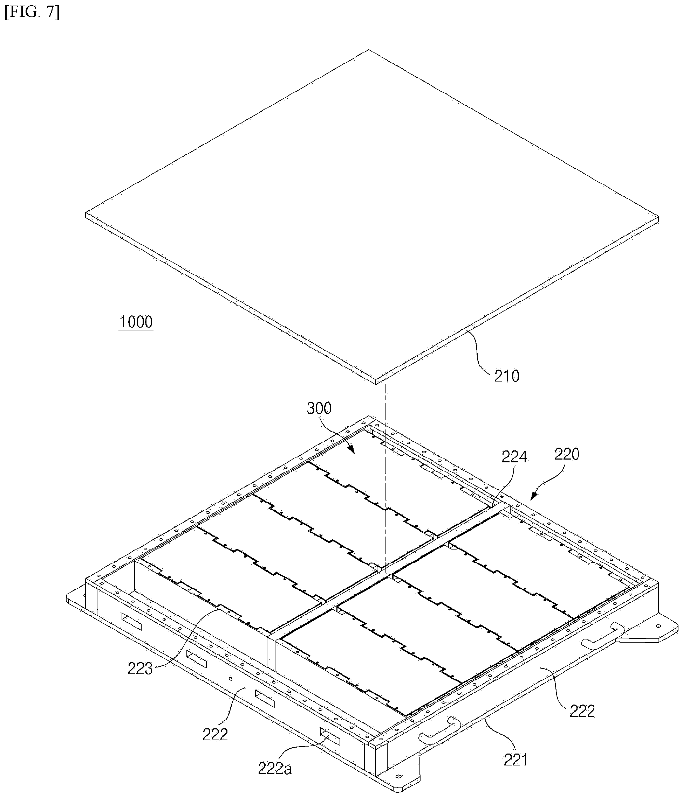

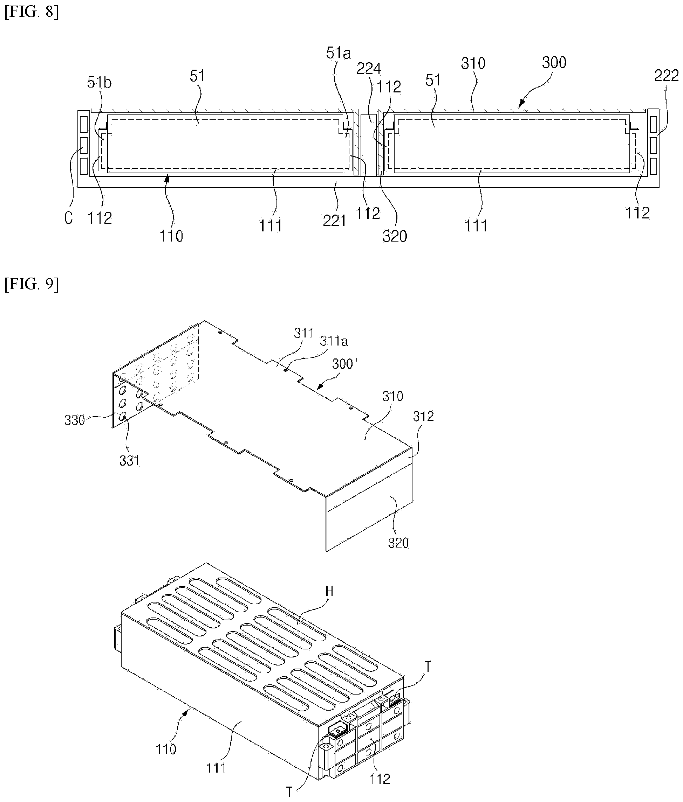

FIG. 6 is a schematic diagram illustrating a process of coupling cover plate assemblies to a battery pack. FIGS. 7 and 8 are a perspective view and a side cross-sectional view of a state in which the cover plate assemblies 300 are coupled to the battery pack 1000.

Referring to FIG. 6, battery modules 110 are disposed in parallel with a partition member 223 interposed therebetween. Terminal parts T are located at both upper ends of end plates 112 installed on front surfaces of the battery modules 110. The terminal parts T of the battery modules 110 that are adjacent to each other with the partition member 223 interposed therebetween are electrically connected to each other through an inter-bus bar B. To secure a space for the coupling of the inter-bus bar B, the corners of a front end of the partition member 223 between the battery modules 110 are cut out. The inter-bus bar B passes the cutouts of the corners and connects the terminal parts T of both battery modules 110 to each other (see FIGS. 6A and 6B).

After the connection of the inter-bus bar B, a cover plate assembly 300 is seated from the top of the battery module 110, and fastening parts 311 of the cover plate assembly 300 are fastened to an upper surface 223a of the partition member 223 between the battery modules 110 (see FIG. 6C).

FIG. 7 illustrates that a plurality of cover plate assemblies 300 are coupled to partition members 223 between battery modules 110 and seated on a plurality of battery modules 110. Thereafter, the assembly of a battery pack of the present invention is completed by fastening an upper cover 210 to a lower pack housing 220 so that the cover plate assemblies 300 may be covered with the upper cover 210.

A coupling relationship of the cover plate assemblies 300 of the present invention is clearly illustrated in FIG. 8. As shown in FIG. 8, upper surfaces of battery modules 110 are covered with upper cover plates 310 of the cover plate assemblies 300 to suppress the propagation of flames to the top of the battery modules 110. Front surfaces of the battery modules 110 are covered with front cover plate 320. In FIG. 8, it is assumed that a battery cell 51 in the battery module 110 is a bidirectional pouch cell whose electrode leads 51a and 5 1b are drawn out to both sides of the battery cell 51. However, the present invention is also applicable to a battery module with unidirectional pouch cells whose electrode leads are drawn out to one side of the cells. The electrode leads 51a and 51b are drawn out to the front and rear of the battery cell, and electrically connected to an inter-bus bar or a terminal bus bar T. The front cover plate 320 is positioned to cover the terminal bus bar (terminal part) T on the front surface of the battery module 110, thereby protecting the terminal part T from flames. As shown in FIG. 8, a venting channel C of a side wall frame 222 is located in the rear of the battery module 110, flames generated on the rear surface of the battery module 110 may be relatively quickly discharged to the venting channel C. The venting channel C communicates with a gas outlet 222a formed in an outer side of the pack housing 200.

### (Second Embodiment)

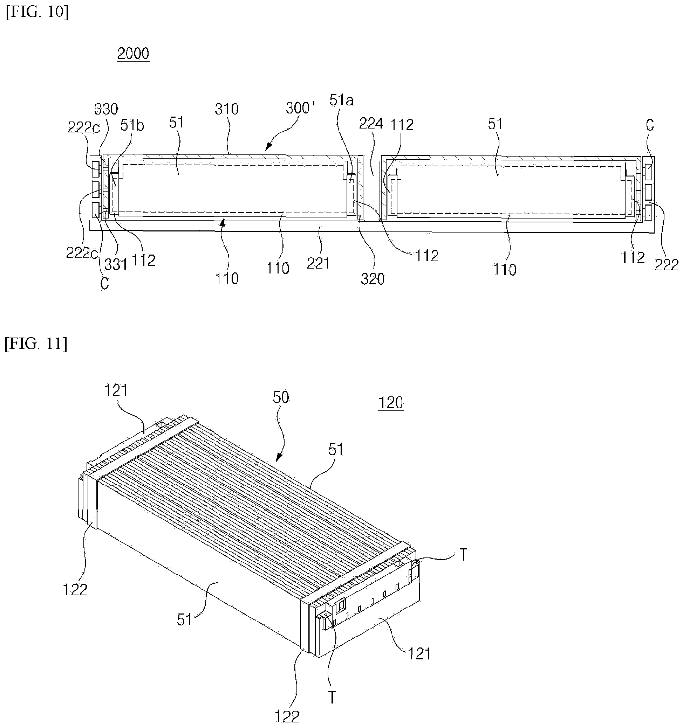

FIG. 9 is a perspective view illustrating a coupling relationship between a cover plate assembly 300' and a battery module 110 applied to another embodiment of the present invention. FIG. 10 is a side cross-sectional view of a battery pack 2000 according to an embodiment of the present invention.

Configurations of the battery module 110 and a pack housing 200 applied to the present embodiment are the same as those of the first embodiment. In addition, the present embodiment is the same as the first embodiment in that the cover plate assembly 300' includes an upper cover plate 310 and a front cover plate 320. A description of the same configuration of the present embodiment as the first embodiment will be omitted here.

The present embodiment is different from the first embodiment in that the cover plate assembly 300' includes a rear cover plate 330. As shown in FIG. 9, the cover plate assembly 300' of the present embodiment includes the front cover plate 320 on one end of the upper cover plate 310, and further includes the rear cover plate 330 vertically coupled to another end of the upper cover plate 310 to cover a rear surface of the battery module 110. As described above, when all of the upper, front and rear surfaces of the battery module 110 are covered with the cover plate assemblies, a risk that an internal pressure of the pack would increase when heat transfer occurs may increase.

In the present embodiment, a plurality of venting holes 331 are formed in the rear cover plate 330 to prevent an increase in the internal pressure of the pack when heat transfer occurs.

The rear cover plate 330 and the upper cover plate 310 may be formed of the same material or different materials. For example, the upper cover plate 310 may be formed of a steel material, and the rear cover plate 330 may be made of a mica material having insulating properties. A material and shape of the rear cover plate 330 may be the same as those of the front cover plate 320.

The method of coupling the upper cover plate 310 and the front cover plate 320 may be employed to couple the rear cover plate 330 and the upper cover plate 310. FIG. 9 illustrates an example in which another end of the upper cover plate 310 is vertically bent and the rear cover plate 330 is coupled to the bent end.

Because the plurality of venting holes 331 are formed in the rear cover plate 330, a gas is discharged through the plurality of venting holes 331 when the gas is generated and the pressure of the gas increases in the pack during the transfer of heat, thereby preventing an increase in the internal pressure of the pack. In particular, the gas can be easily discharged by allowing the venting holes 331 of the rear cover plate 330 to communicate with the outside.

As shown in FIG. 10, when a gas venting channel C is formed in the side wall frame 222 of the pack housing 200, the rear cover plate 330 may be installed such that the venting holes 331 thereof face or are in contact with an entrance 222c of the gas venting channel C. In the example of FIG. 10, when flames are generated due to a thermal runaway in a certain battery module 110, the upper cover plate 310 and the front cover plate 320 of the cover plate assembly 300 prevent the propagation of the flames to battery modules 110 adjacent to the battery module 110. In addition, the rear cover plate 330 of the cover plate assembly 300 may prevent the propagation of the flames behind the battery module 110. In this case, when a gas is generated from the battery module 110, the gas may be discharged to the outside through the venting holes 331 of the rear cover plate 330 and the gas venting channel C of the side wall frame 222 communicating with the venting holes 331.

Therefore, the present embodiment is advantageous in that an internal pressure of the pack can be prevented from increasing while maximizing an effect of preventing the propagation of flames in the pack.

### (Third Embodiment)

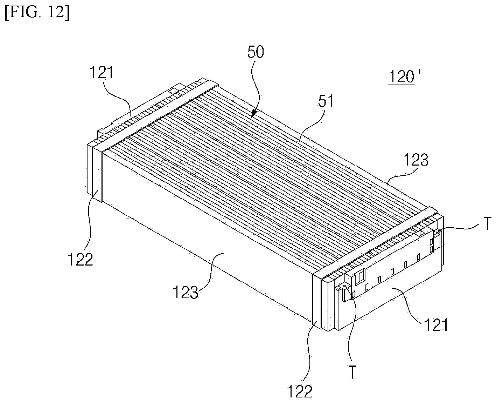

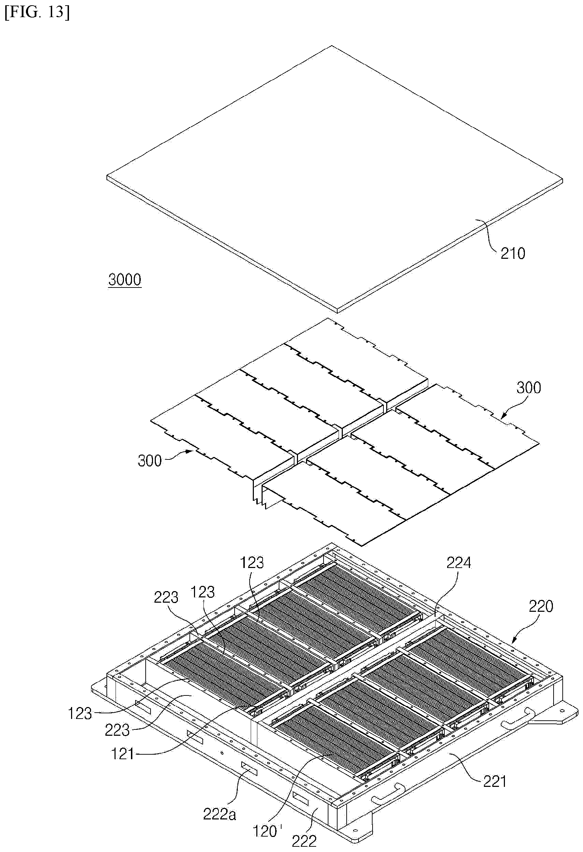

FIGS. 11 and 12 are perspective views of examples of a moduless cell block which is a battery unit 100. FIG. 13 is a perspective view of a battery pack 3000 according to another embodiment of the present invention.

As described above, moduless cell blocks 120 and 120' may be employed as battery units 100, as well as the battery module 110.

FIG. 11 illustrates a battery cell stack 50, and a cell block 120 in which bus bar assemblies 121 are coupled to a front surface and a rear surface of the battery cell stack 50. The cell block 120 has a moduless structure in which the upper, lower, left, and right surfaces of the battery cell stack 50 are not covered with a module case 111.

FIG. 12 illustrates a cell block 120' that includes a battery cell stack 50, bus bar assemblies 121 coupled to front and rear surfaces of the battery cell stack 50, and side support plates 123 coupled to both sides of the battery cell stack 50. The cell block 120' of FIG. 12 has a moduless structure in which upper and lower surfaces of the battery cell stack 50 are open and a part of a module case 111 is omitted.

The battery cells 51 may be stacked such that side surfaces thereof are in contact with each other, and sides of adjacent battery cells 51 may be fixed by a double-sided tape. Alternatively, a plurality of stacked battery cells may be tied together with a band 122 to form one battery cell stack 50 (see FIGS. 11 and 12).

Bus bar assemblies 121 are coupled to electrode leads on the front and rear surfaces of the battery cell stack 50. The bus bar assemblies 121 are provided with terminal parts T.

FIG. 13 illustrates that moduless cell blocks 120' are installed in a pack housing 200. As in the first embodiment, the pack housing 200 includes a battery unit (cell block) mounting area and partition members 223 for partitioning the cell block mounting area. In addition, as in FIG. 2, a center frame 224 is provided, and the partition members 223 are arranged perpendicular to the center frame 224.

The cell blocks 120' are arranged between the partition members 223 such that front surfaces of the cell blocks 120' provided with the terminal parts T face the center frame 224.

The cell blocks 120' may be mounted between the partition members 223 after either both sides of a battery stack or side support plates 123 installed on the both sides of the battery stack are compressed to reduce the volume thereof. In this case, the side support plates 123 may be fastened to the partition members 223 by a fastening member or the like.

Similarly, in the present embodiment, cover plate assemblies 300 each including an upper cover plate 310 and a front cover plate 320 are seated on the cell blocks 120' from the top of the cell blocks 120'. The upper cover plates 310 are coupled to the upper surfaces of the partition members 223, which partition the cell blocks 120', to protect the upper and front surfaces of the cell blocks 120' from flames.

The battery pack 3000 of the present embodiment **includes** moduless cell blocks in which a part of or the entire module case 111 is omitted and thus the cover plate assemblies 300 play an important role. That is, the upper cover plates 310 may not only prevent flames but also cover upper parts of the cell blocks having no module case 111 and protect upper parts of the battery cell stacks 50. That is, in the moduless cell blocks 120 and 120', a module case is omitted to reduce the number of related components, thus increasing energy density, but the moduless cell blocks 120 and 120' are partially exposed and thus are vulnerable to contamination or flames in the pack. The cover plate assemblies 300 may cover such moduless cell blocks to effectively protect the cell blocks from contaminants and flames in the pack.

### (Fourth Embodiment)

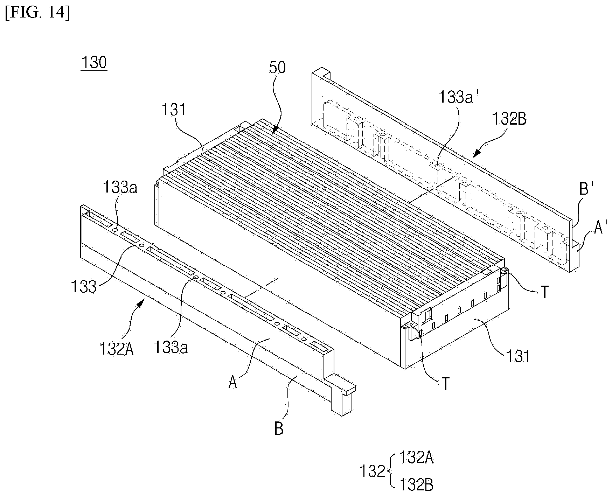

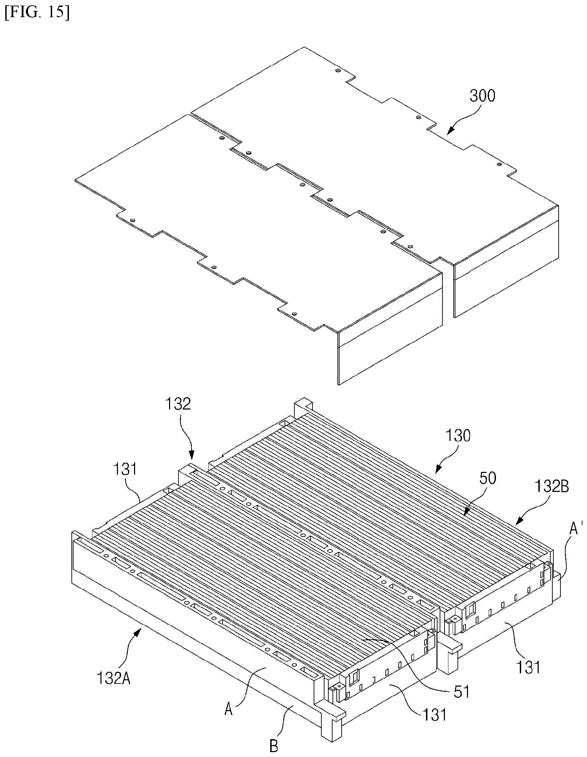

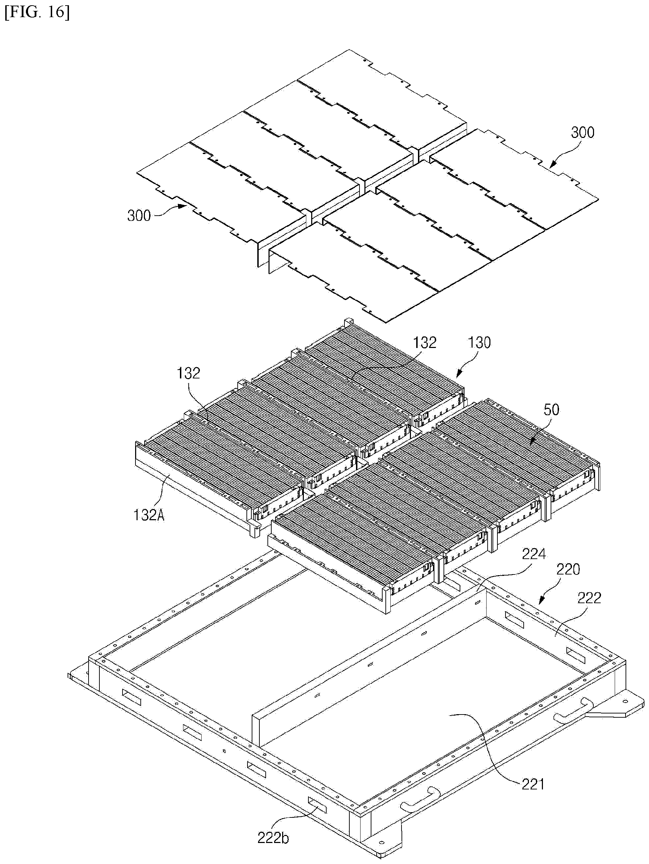

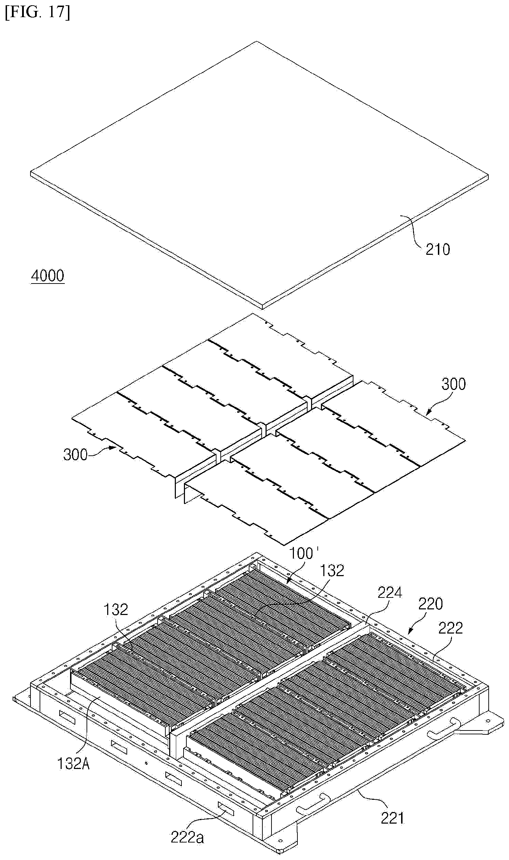

FIG. 14 is a perspective view of another example of a moduless cell block which is a battery unit. FIG. 15 is a schematic diagram illustrating a process of coupling moduless cell blocks such as that in FIG. 14. FIGS. 16 and 17 are perspective views illustrating a process of coupling battery packs 4000 such as that in the embodiment of FIG. 14.

Similar to the third embodiment, in the present embodiment, a moduless cell block 130 in which a part of a module case for accommodation of a battery cell stack 50 is omitted is set to a battery unit 100. However, the present embodiment is different from the first to third embodiments in that cover plate assemblies 300 are coupled to the cell blocks 130 rather than partition members 223 of a pack housing 200.

Referring to FIG. 14, the cell block 130 according to the present embodiment includes a battery cell stack 50, a bus bar assembly 131 coupled to a front surface of the battery cell stack 50, and side support plates 132A and 132B coupled to both side sides of the battery cell stack 50.

The bus bar assembly 131 includes terminal bus bars T on both sides thereof.

The cell block 130 of the present invention is fixedly installed in a cell block mounting area of the pack housing 200. Specifically, the side support plates 132A and 132B coupled to both sides of the cell block 130 are coupled to a base plate 221 of the pack housing 200, thereby fixing the cell block 130 to the pack housing 200.

In particular, the cell block 130 of the present embodiment includes the side support plates 132A and 132B having unique structures to be combined with neighboring cell blocks.

Referring to FIG. 14, the side support plates 132A and 132B include a first side support plate 132A to be coupled to one side of the battery cell stack 50 and a second side support plate 132B to be coupled to another side of the battery cell stack 50.

The first and second side support plates 132A and 132B have complementary structures to be meshed with each other. For example, as shown in FIG. 14, the first side support plate 132A has a stepped structure having a projecting part A on an upper side and a recessed part B on a lower side. In contrast, the second side support plate 132B has a stepped structure having a projecting part A' on a lower side and a recessed part B' on an upper side. The stepped structure of the first side support plate 132A and the stepped structure of the second side support plate 132B are configured to be meshed with each other to match each other. Therefore, adjacent cell blocks 130 may be coupled to each other by meshing a first side support plate 132A of one of the cell blocks 130 with a second side support plate 132B of the other and coupling the cell blocks 130 by a fastening member. Fastening holes 133a are formed at the same positions on the first and second side support plates 132A and 132B to couple the first and second side support plates 132A and 132B to each other. That is, as shown in FIG. 14, a plurality of fastening holes 133a are formed to pass through an upper surface 133 of the projecting part of the first side support plate 132A, and a plurality of fastening holes 133a' are formed at positions corresponding to the plurality of fastening holes 133a to pass through the projecting part A' on the lower side of the second side support plate 132B. Therefore, the first and second side support plates 132A and 132B may be coupled to each other by allowing a fastening member such as a bolt to pass through the fastening holes 133a and 133a' in the first and second side support plates 132A and 132B.

FIG. 15 illustrates that the first and second side support plates 132A and 132B of the adjacent cell blocks are coupled to each other by the coupling process described above. As shown in FIG. 15, an assembly of the first and second side support plates 132A and 132B forms a stack partition member 132 for partitioning adjacent battery cell stacks 50. In the present embodiment, the cover plate assembly 300 may be coupled to the stack partition member 132. That is, fastening parts 311 of the upper cover plate 310 of the cover plate assembly 300 may be fastened to an upper surface 133 of the stack partition member 132. The stack partition member 132 is formed by coupling cell blocks, compared to the partition member 223 installed in the pack housing 200 in advance in the previous embodiment.

FIG. 16 illustrates a pack housing 200 with a center frame 224 extending to cross the cell block mounting area. The partition member 223 is not installed on the cell block mounting area of the pack housing 200, unlike in the pack housing 200 of FIG. 2. Two rows of cell block assemblies may be formed at both sides of the center frame 224 as shown in FIG. 16 by complementarily coupling opposite side support plates of adjacent cell blocks 130 to each other as shown in FIG. 15. The cell block assemblies are installed at both sides of the center frame 224 such that cell blocks 130 are arranged perpendicular to the center frame 224 and front surfaces of the cell blocks 130 face the center frame 224.

The cell blocks 130 or the cell block assemblies may be fixed to the pack housing 200 by coupling the stack partition member 132 to a base plate 221 of the pack housing 200. For example, when the fastening members are coupled to pass through the fastening holes of the first side support plate 132A and the second side support plate 132B as shown in Fig. 14, ends of the fastening members 133a and 133b are coupled to the base plate 221, thereby simultaneously coupling the cell blocks to each other and coupling the cell blocks to the base plate 221. Alternatively, fastening holes may be additionally formed in the upper surface of the stack partition member 132 including the first and second side support plates 132A and 132B (the upper surface of the first side support plate 132A), and fastening members may be inserted into the fastening holes to fasten the cell blocks to the base plate 221.

As shown in FIG. 17, when the cell blocks are coupled to the pack housing 200, the cover plate assemblies 300 may be coupled to the cell blocks. That is, the upper cover plate 310 of the cover plate assembly 300 may be fastened onto the stack partition member 132 formed by coupling the first and second side support plates 132A and 132B between adjacent battery cell stacks 50. As necessary, fastening holes may be formed at the same positions on the first and second side support plates and the fastening parts of the upper cover plate 310. In this case, the fastening holes in the first and second side support plates and the fastening holes in the upper cover plate 310 may be aligned with each other, and the same fastening members may be inserted into and fastened to the aligned fastening holes. Accordingly, the coupling of the cell blocks and the coupling of the cover plate assemblies 300 may be simultaneously performed.

According to the present embodiment, the structure of the battery pack 1000 can be simplified with the use of moduless cell blocks, and further be simplified by configuring the stack partition member 132 by coupling the cell blocks without the partition member 223. Therefore, energy density may be further improved.

Meanwhile, in the second embodiment, a case in which the battery module 110 is used as the battery unit 100 has been described. However, the cover plate assembly 300 of the second embodiment is also applicable to cases in which the moduless cell blocks 120, 120', and 130 of the third and fourth embodiments are used. That is, even in the battery packs 1000 of the third and fourth embodiments, the cover plate assembly 300 with the rear cover plate 330 may be fastened to the partition member 223 or the stack partition member 132, thereby preventing the propagation of flames to rear sides of cell blocks.

The above description is only an example of the technical idea of the present invention and various modification and changes may be made by those of ordinary skill in the technical field to which the present invention pertains without departing from the essential features of the present invention. Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

### (Reference Numerals)

50: battery cell stack
51: battery cell
100: battery unit
110: battery module
111: module case
112: end plate
T: terminal part
120, 120', 130: cell block
121: bus bar assembly
122: band
123: side support plate
131: bus bar assembly
132: stack partition member
132A: first side support plate
132B: second side support plate
200: pack housing
210: upper cover
220: lower pack housing
221: base plate
222: side wall frame
223: partition member
224: center frame
300, 300': cover plate assembly
310: upper cover plate
3 11: fastening part
311a: fastening hole
312: a coupling portion (bent part)
320: front cover plate
321: cut part
330: rear cover plate
331: venting hole
1000, 2000, 3000, 4000: battery pack

## Claims

1. A battery pack comprising:
a plurality of battery units each including a battery cell stack, and a terminal part provided on a front surface of the battery units and electrically connected to the battery cell stack;
a pack housing including a battery unit mounting area and partition members configured to partition the battery unit mounting area into a plurality of parts, wherein each of the plurality of battery units is accommodated in the battery unit mounting area between the partition members; and
cover plate assemblies coupled to the partition members while covering upper surfaces and front surfaces of the plurality of battery units.

2. The battery pack of claim 1, wherein each of the plurality of battery units comprises
a battery module including a module case configured to accommodate the battery cell stack; and
end plates coupled to a front surface and a rear surface of the module case.

3. The battery pack of claim 1, wherein each of the plurality of battery units comprises
a moduless cell block in which the bus bar assemblies are coupled to a front surface and a rear surface of the battery cell stack and a part of or an entire module case for accommodation of the battery cell stack is omitted,
wherein the terminal part is provided on the bus bar assembly coupled to the front surface of the battery cell stack.

4. The battery pack of claim 3, wherein, in the moduless cell block, side support plates are coupled to both sides of the battery cell stack, and
both an upper surface and a lower surface of the battery cell stack, excluding surfaces to which the side frames and the bus bar frame assembly are coupled, are open.

5. The battery pack of claim 1, wherein the pack housing comprises a center frame extending to cross the battery unit mounting area,
a plurality of partition members are arranged at both sides of the center frame to be perpendicular to a direction in which the center frame extends, and
the plurality of battery units are arranged between the plurality of partition members, wherein front surfaces of the plurality of battery units face the center frame.

6. The battery pack of claim 1, wherein a plurality of cover plate assemblies are provided to correspond to the number of the plurality of battery units,
wherein the plurality of cover plate assemblies are coupled to the partition members while covering the plurality of battery units.

7. The battery pack of claim 1, wherein each of the cover plate assemblies comprises: an upper cover plate covering an upper surface of the battery unit; and a front cover plate vertically coupled to one end of the upper cover plate to cover the front surface of the battery unit.

8. The battery pack of claim 7, wherein a plurality of fastening parts protrude at intervals along both sides of the upper cover plate, and are coupled to upper surfaces of the partition members.

9. The battery pack of claim 8, wherein fastening parts of upper cover plates of adjacent cover plate assemblies are coupled to the same partition members by disposing the fastening parts of the upper cover plate of one of the adjacent cover plate assemblies between the fastening parts of the upper cover plate of the other cover plate assembly to mesh the fastening parts with each other.

10. The battery pack of claim 7, wherein the front cover plate is formed of an electrically insulating material.

11. The battery pack of claim 7, wherein each of the cover plate assemblies further comprises a rear cover plate vertically coupled to another end of the upper cover plate to cover a rear surface of the battery unit,
wherein a plurality of venting holes are formed in the rear cover plate.

12. A battery pack comprising:
a plurality of cell blocks each including a battery cell stack, a bus bar assembly coupled to a front surface of the battery cell stack, and side support plates coupled to both sides of the battery cell stack;
a pack housing including a cell block mounting area, wherein the plurality of cell blocks are fixedly installed on the cell block mounting area; and
cover plate assemblies coupled to the plurality of cell blocks while covering upper surfaces and front surfaces of the plurality of cell blocks.

13. The battery pack of claim 12, wherein the pack housing comprises a center frame extending to cross the cell block mounting area, and
the plurality of cell blocks are arranged perpendicular to a direction in which the center frame extends while front surfaces thereof face the center frame.

14. The battery pack of claim 12, wherein the side support plates comprise a first side support plate coupled to one side of the battery cell stack and a second side support plate coupled to another side of the battery cell stack, wherein the first and second side support plates have complementary structures to be meshed with each other,
wherein adjacent cell blocks are coupled to each other by meshing a first side support plate of one of two opposite battery cell stacks with a second side support plate of the other battery cell stack, and
the adjacent cell blocks are fixedly installed in the pack housing by coupling the first and second side support plates that are meshed with each other to the cell block mounting area.

15. The battery pack of claim 14, wherein the first and second side support plates that are meshed with each other form a stack partition member to partition the battery cell stacks,
wherein the cover plate assembly is coupled to an upper surface of the stack partition member.
